# EUROPÄISCHE PATENTSCHRIFT

(11) **EP 3 819 138 B1**
(45) Veröffentlichungstag und Bekanntmachung des Hinweises auf die Patenterteilung: **13.09.2023**
(21) Anmeldenummer: 20205960.6
(22) Anmeldetag: 05.11.2020
(51) Int. Cl.: B60D 1/06, B60D 1/64, H01R 13/506

(54) **EINBAUEINHEIT**
BUILT-IN UNIT
UNITÉ D'INSTALLATION

(30) Priorität: 11.11.2019 DE 102019130312
(43) Veröffentlichungstag der Anmeldung: 12.05.2021
(73) Patentinhaber: ACPS Automotive GmbH, 74379 Ingersheim (DE)
(72) Erfinder: König, Ferdinand, 71642 Ludwigsburg (DE)
(74) Vertreter: Hoeger, Stellrecht & Partner Patentanwälte mbB

(56) Entgegenhaltungen:
- EP-A1- 0 873 890
- EP-A2- 0 285 703
- EP-A2- 2 952 368
- EP-B1- 0 285 703
- EP-B1- 0 873 890
- EP-B1- 2 952 368
- DE-A1- 4 301 506

## Beschreibung

Die Erfindung betrifft eine Einbaueinheit für eine an einer Karosserie eines Kraftfahrzeugs angebaute Trägereinheit, umfassend ein Gehäuse mit einem sich auf einer Seite der Trägereinheit abstützenden ersten Gehäuseabschnitt und einem eine Aufnahme in der Trägereinheit durchgreifenden zweiten Gehäuseabschnitt sowie einen dem ersten Gehäuseabschnitt gegenüberliegenden und sich an der Trägereinheit an einer dem ersten Gehäuseabschnitt abgewandten Seite abstützenden Montagekörper, der bei an der Trägereinheit montierter Einbaueinheit an dem zweiten Gehäuseabschnitt durch erste an dem zweiten Gehäuseabschnitt und zweite an dem Montagekörper angeordnete Rastelemente fixiert ist, wobei der Montagekörper einen Basiskörper aufweist, mit welchem die zweiten Rastelemente verbunden sind, und der Montagekörper mit Stützelementen zusammenwirkt, welche sich an der Trägereinheit abstützen.

Derartige Einbaueinheiten sind aus dem Stand der Technik, beispielsweise der EP 2 952 368 A2 bekannt.

Ausgehend von diesem Stand der Technik liegt der Erfindung die Aufgabe zugrunde, eine Einbaueinheit zur Verfügung zu schaffen, bei welcher die Verbindung zwischen den Rastelementen einerseits dauerhaft stabil ist und andererseits leicht gelöst werden kann.

Diese Aufgabe wird bei einer Einbaueinheit der eingangs beschriebenen Art erfindungsgemäß dadurch gelöst, dass die zweiten Rastelemente durch elastisch bewegbare Rastelementträger mit dem Basiskörper verbunden sind und dass die elastisch bewegbaren Rastelementträger auf einer dem zweiten Gehäuseabschnitt zugewandten Seite Druckflächen aufweisen, über welche die elastisch bewegbaren Rastelementträger derart beaufschlagbar sind, dass die zweiten Rastelemente gegen die elastische Kraftwirkung der Rastelementträger von den ersten Rastelementen wegbewegbar sind und mit den ersten, am zweiten Gehäuseabschnitt vorgesehenen Rastelementen außer Eingriff kommen.

Mit dieser Lösung besteht in einfacher Weise durch Einwirkung auf die Druckflächen die Möglichkeit, die Rastelemente außer Eingriff zu bringen, um den Montagekörper von dem Gehäuse, insbesondere dem zweiten Gehäuseabschnitt, in einfacher Weise lösen zu können.

Besonders günstig ist es dabei, wenn die Druckflächen sich an den Rastelementträgern ausgehend von ihren dem Basiskörper zugewandten Enden bei ihrer Erstreckung in Richtung der zweiten Rastelemente zunehmend in Richtung der ersten Rastelemente des zweiten Gehäuseabschnitts erstrecken, das heißt, dass die Druckflächen auf die ersten Rastelemente des zweiten Gehäuseabschnitts zu verlaufen.

Insbesondere lässt sich dies dadurch erreichen, dass die Druckflächen im Bereich der Enden der Rastelementträger einen Abstand von dem zweiten Gehäuse und/oder den ersten Rastelementen desselben aufweisen, der sich mit zunehmender Erstreckung der Rastelementträger in Richtung der zweiten Rastelemente verringert.

Dies kann ein konischer Verlauf der Druckflächen sein oder ein gewölbter Verlauf, wobei in jedem Fall der Abstand der Druckflächen nahe der zweiten Rastelemente von den ersten Rastelementen geringer ist als im Bereich der dem Basiskörper zugewandten Enden der Rastelementträger.

Besonders vorteilhaft ist es, wenn die Druckflächen eine an dem jeweiligen Rastelementträger gebildete Aussparung begrenzen, das heißt die Druckflächen beispielsweise einen Boden einer in dem jeweiligen Rastelementträger ausgebildeten Aussparung darstellen, der insbesondere einer den ersten Rastelementen zugewandten offenen Seite der Aussparung gegenüberliegend angeordnet ist.

Ferner ist es zur Betätigung der Rastelementträger über die Druckflächen günstig, wenn die Druckflächen über am Basiskörper vorgesehene Zugangsöffnungen von Seiten des Basiskörpers zugänglich sind, so dass ein Einwirken auf die Druckflächen über die Zugangsöffnungen möglich ist.

Besonders günstig lässt sich dies realisieren, wenn die jeweiligen Aussparungen über die Zugangsöffnungen zugänglich sind.

Zum Lösen der Rastverbindung ist es besonders günstig, wenn die Druckflächen der Rastelementträger durch auf die Druckflächen wirkende Lösefinger derart beaufschlagt werden, dass die Rastelementträger die zweiten Rastelemente in eine nicht mehr mit den ersten Rastelementen verrastende Lösestellung bewegen.

Damit besteht die Möglichkeit, die Rastverbindung in einfacher Weise zu lösen, ohne dass die ohne Einwirkung auf die Lösefinger bestehende Qualität der Rastverbindung zwischen den ersten Rastelementen und den zweiten Rastelementen beeinträchtigt ist.

Insbesondere erfolgt das Einwirken der Lösefinger dadurch, dass die Lösefinger durch die Zugangsöffnungen in die Aussparungen eingeführt werden.

Prinzipiell wäre es denkbar, eine Vielzahl von Lösefingern einzusetzen, um die Druckflächen sämtlicher Rastelementträger zu beaufschlagen, um diese Rastelementträger in die Lösestellung zu überführen.

Eine besonders vorteilhafte Lösung sieht dabei vor, dass die Druckflächen durch an einem Lösewerkzeug angeordnete Lösefinger zum Lösen der Rastverbindung beaufschlagt werden.

Dabei ist es besonders günstig, wenn die Zahl der Lösefinger an dem Lösewerkzeug der Zahl der mit Druckflächen versehenen Rastelementträger entspricht, so dass die Möglichkeit besteht, alle Rastelementträger mit ihren Druckflächen gleichzeitig zu beaufschlagen, um den Montagekörper von dem Gehäuse zu lösen.

Hinsichtlich der Ausbildung der Rastelemente wurden bislang keine näheren Angaben gemacht.

So sieht eine vorteilhafte Lösung vor, dass die zweiten Rastelemente als Rastkrallen oder Rastvertiefungen ausgebildet sind, welche mit an dem zweiten Gehäuseabschnitt angeordneten als Rastvertiefungen oder Rastkrallen ausgebildeten ersten Rastelementen zusammenwirken.

Ferner ist vorzugsweise vorgesehen, dass die Rastelementträger die Rastelemente elastisch bewegbar mit dem Basiskörper verbinden, so dass durch die elastische Bewegbarkeit der Rastelementträger die Bewegung der zweiten Rastelemente relativ zu den ersten Rastelementen realisierbar ist.

Insbesondere sind die Rastelementträger dabei so ausgebildet, dass diese elastisch deformierbar sind.

Ferner ist vorzugsweise vorgesehen, dass die Rastelementträger die zweiten Rastelemente derart beaufschlagen, dass diese aufgrund der elastischen Kraftwirkung der Rastelementträger bei wirksamer Rastverbindung mit den ersten Rastelementen in Eingriff gehalten werden.

Das heißt, dass die Rastelementträger derart ausgebildet sind, dass sie bei mit den ersten Rastelementen zusammenwirkenden zweiten Rastelementen nach wie vor eine elastische Kraftwirkung auf die zweiten Rastelemente dergestalt entfalten, dass diese kraftbeaufschlagt mit den ersten Rastelementen in Eingriff bleiben.

Hinsichtlich der Ausbildung des Basiskörpers selbst wurden bislang keine näheren Angaben gemacht.

So sieht eine vorteilhafte Lösung vor, dass der Basiskörper ein geschlossen um eine Mittelachse des zweiten Gehäuseabschnitts umlaufender Körper ist.

Dabei ist zweckmäßigerweise vorgesehen, dass der Basiskörper zumindest teilweise als Ringkörper ausgebildet ist, dessen Ringkörperenden durch eine Brücke miteinander verbunden sind.

In diesem Fall besteht insbesondere die Möglichkeit, dass die Brücke einen Durchlass für eine in das zweite Gehäusesegment führende Leitung bildet, wobei durch die Brücke die Leitung einerseits vorteilhaft in das zweite Gehäusesegment eingeführt werden kann und außerdem in Anlage an der Trägereinheit gehalten werden kann.

Hinsichtlich der Ausbildung der Stützelemente wurden im Zusammenhang mit der bisherigen Beschreibung der erfindungsgemäßen Lösung keine näheren Angaben gemacht.

So sieht eine vorteilhafte Lösung vor, dass die Montageeinheit sich mittels der Stützelemente an einer dem ersten Gehäuseabschnitt gegenüberliegenden Seite der Trägereinheit abstützt.

Eine derartige Abstützung hat den Vorteil, dass sich somit die Einbaueinheit im an der Trägereinheit montierten Zustand einerseits an einer Seite der Trägereinheit mit dem ersten Gehäuseabschnitt abstützt und auf der gegenüberliegenden Seite der Trägereinheit mit der Montageeinheit mittels der Stützelemente abstützt.

Das Abstützen der Stützelemente an der Trägereinheit erfolgt insbesondere dabei an einer Seitenfläche der Trägereinheit außerhalb der Aufnahme.

Desgleichen erfolgt zweckmäßigerweise auch eine Abstützung der Einbaueinheit mit dem ersten Gehäuseabschnitt an einer Seitenfläche der Trägereinheit außerhalb der Aufnahme.

Hinsichtlich der Ausbildung der Stützelemente wurden ebenfalls bislang noch keine näheren Angaben gemacht.

So ist vorzugsweise vorgesehen, dass die Stützelemente Stützfüße aufweisen, die mittels elastisch deformierbaren Stützfußträgern mit dem Basiskörper verbunden sind.

Damit besteht die Möglichkeit, dass durch die elastisch deformierten Stützfußträger sich an geometrische Maßabweichungen der Trägereinheit anpassen können.

Vorzugsweise sind dabei die Stützfußträger so ausgebildet, dass sie sich bogenförmig von dem Basiskörper zu den Stützfüßen erstrecken.

Ferner sind vorzugsweise die Stützelemente so ausgebildet, dass sie in einer parallel zu der an der Trägereinheit vorgesehenen Seitenfläche verlaufenden Fläche aufeinanderfolgend angeordnet, jedoch relativ zueinander elastisch bewegbar ausgebildet sind.

Dies hat den Vorteil, dass sich die verschiedenen relativ zueinander elastisch bewegbaren Stützelemente noch besser an geometrische Maßabweichungen sowohl der Trägereinheit als auch der Einbaueinheit anpassen können. Insbesondere sind die Stützelemente so ausgebildet, dass bei montierter Einbaueinheit die Montageeinheit soweit auf den zweiten Gehäuseabschnitt aufgeschoben und durch die Rastverbindung festgelegt ist, dass die Stützelemente elastisch deformiert sind, so dass durch die elastische Deformation der Stützelemente diese die Trägereinheit zwischen dem Montagekörper und dem ersten Gehäuseabschnitt einspannen und somit die Einbaueinheit gegen Bewegungen relativ zur Trägereinheit form- und kraftschlüssig fixieren.

Besonders günstig ist es, wenn die Einbaueinheit zur Aufnahme elektrischer Komponenten dient.

Aus diesem Grund ist vorzugsweise vorgesehen, dass in dem zweiten Gehäuseabschnitt von dessen dem ersten Gehäuseabschnitt abgewandter Seite eine elektrische Leitung eingeführt ist.

Ferner ist vorzugsweise vorgesehen, dass der zweite Gehäuseabschnitt auf seiner dem ersten Gehäuseabschnitt abgewandten Seite durch einen Deckel verschlossen ist, wobei insbesondere die elektrische Leitung durch den Deckel hindurchgeführt ist.

Rein theoretisch könnten der Deckel und die Montageeinheit zu einem einzigen Teil zusammengefasst sein.

Besonders günstig ist es jedoch, wenn der Deckel und die Montageeinheit separate Teile sind.

Dabei bestünde immer noch die Möglichkeit, dass der Deckel an der Montageeinheit gehalten ist.

Besonders vorteilhaft ist es jedoch, wenn der Deckel an dem zweiten Gehäuseabschnitt fixiert ist, so dass ein Gehäuseinnenraum durch die Gehäuseabschnitte und den Deckel, unabhängig von der Position der Montageeinheit, abgeschlossen werden kann.

In diesem Fall besteht die Möglichkeit, dass die Montageeinheit den Deckel umschließend ausgebildet ist und somit in ihrem das Gehäuse fixierenden und mit dem zweiten Gehäuseabschnitt durch die Rastelemente verbundenen Zustand nicht nur einen Endbereich des zweiten Gehäuseabschnitts sondern auch einen sich an diesen Endbereich anschließenden Teilbereich des Deckels umschließt.

Eine besonders vorteilhafte Lösung sieht vor, dass der Deckel eine Außenfläche aufweist, an welcher sich die Lösefinger bei der Einwirkung auf die Druckflächen abstützen, so dass die Abstützung der Lösefinger nicht durch den zweiten Gehäuseabschnitt erfolgen muss, sondern durch den Deckel erfolgt und somit die Möglichkeit besteht, die ersten Rastelemente unmittelbar im Endbereich des ersten Gehäuseabschnitts anzuordnen.

Hinsichtlich der Ausbildung der Einbaueinheit sind die unterschiedlichsten Lösungen denkbar.

Eine vorteilhafte Lösung sieht vor, dass die Einbaueinheit zur Aufnahme eines Steckverbinderelements ausgebildet ist.

Eine andere vorteilhafte Lösung sieht vor, dass die Einbaueinheit zur Aufnahme einer elektronischen Schaltung ausgebildet ist.

Eine weitere Lösung sieht vor, dass die Einbaueinheit zur Aufnahme von Sensoren ausgebildet ist.

Darüber hinaus betrifft die Erfindung eine Trägereinheit zur Montage an einer Karosserie eines Kraftfahrzeugs, welche mit einer Einbaueinheit nach einem der voranstehenden Ansprüche versehen ist.

Ferner wurden hinsichtlich der Ausbildung der Trägereinheit keine näheren Angaben gemacht.

Beispielsweise könnte jedes Element der Trägereinheit mit der Aufnahme für die Einbaueinheit vorgesehen sein.

Eine besonders günstige Lösung sieht vor, dass die Trägereinheit ein Kupplungselement für einen Anhänger und/oder ein Kupplungselement für einen Lastenträger umfasst, welches mit der Aufnahme versehen ist. Besonders günstig ist es, wenn das Kupplungselement sich von einer Heckseite des Kraftfahrzeugs weg erstreckt.

Das Kupplungselement kann dabei entweder lösbar mit den übrigen Komponenten der Trägereinheit verbunden sein oder zwischen einer Arbeitsstellung und einer Ruhestellung verschwenkbar mit den übrigen Komponenten der Trägereinheit verbunden sein.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines Kraftfahrzeugs mit einer erfindungsgemäßen Trägereinheit;
- Fig. 2: eine Darstellung einer Ausführungsform einer erfindungsgemäßen Trägereinheit;
- Fig. 3: eine Ansicht eines Kugelhalses der Trägereinheit in Richtung des Pfeils X in Fig. 2;
- Fig. 4: eine Seitenansicht des Kugelhalses mit einer erfindungsgemäßen Einbaueinheit;
- Fig. 5: einen Schnitt längs Linie 5-5 in Fig. 4;
- Fig. 6: eine vergrößerte Darstellung des Bereichs Z in Fig. 5;

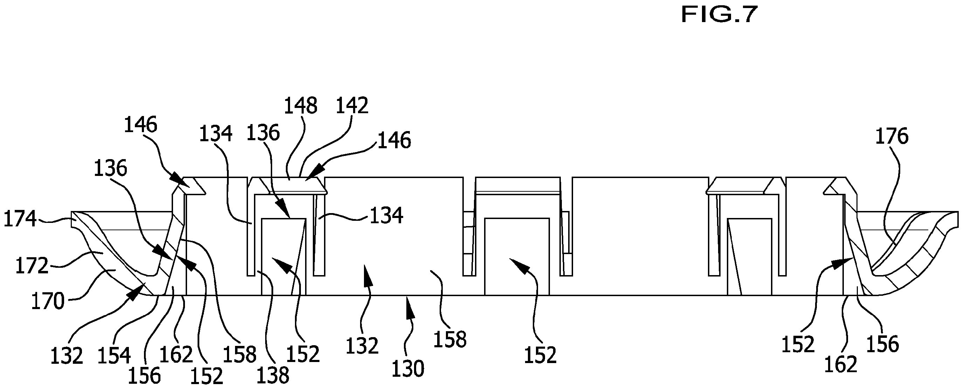

- Fig. 7: einen vergrößerten Schnitt ähnlich Fig. 5 durch einen Montagekörper;

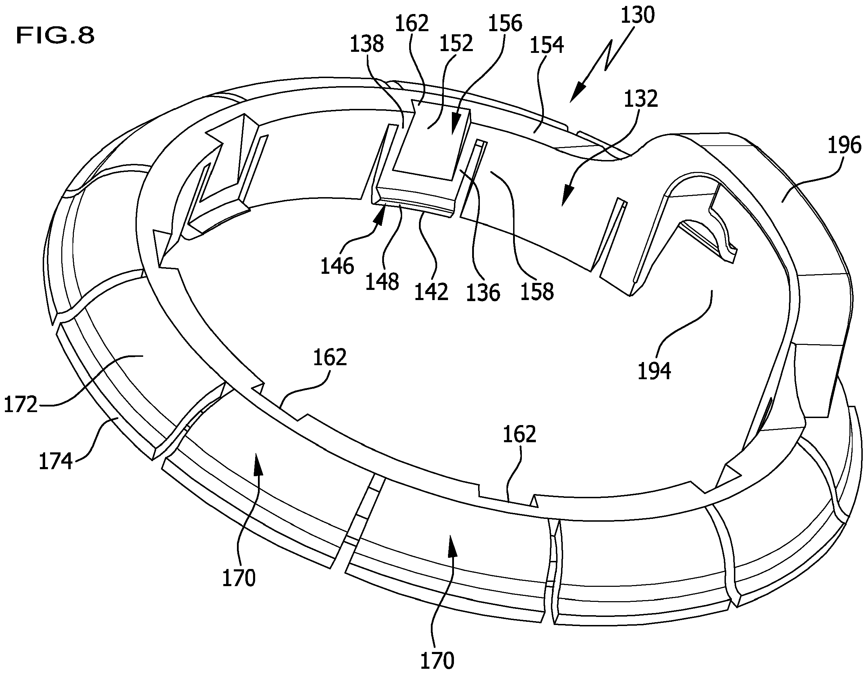

- Fig. 8: eine perspektivische Darstellung des Montagekörpers gemäß Fig. 7;
- Fig. 9: eine Ansicht ähnlich Fig. 4 beim Ansetzen eines erfindungsgemäßen Lösewerkzeugs;
- Fig. 10: eine Ansicht ähnlich Fig. 9 mit wirksamem Lösewerkzeug;
- Fig. 11: einen Schnitt ähnlich Fig. 5 mitsamt der Darstellung einer Einwirkung des Lösewerkzeugs mit den Lösefingern und

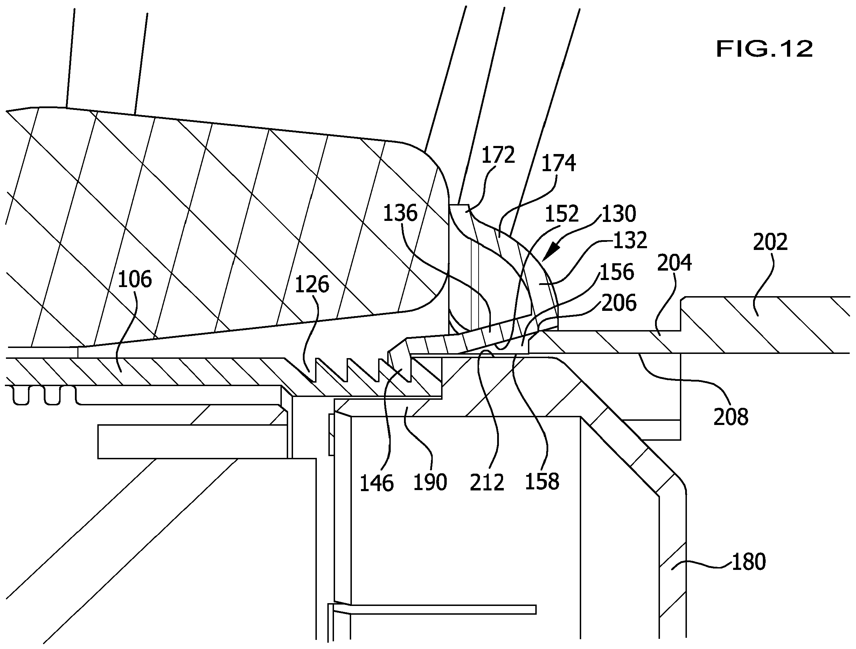

- Fig. 12: einen Schnitt ähnlich Fig. 6 mit der Darstellung der Einwirkung der Lösefinger auf die Rastelementträger.

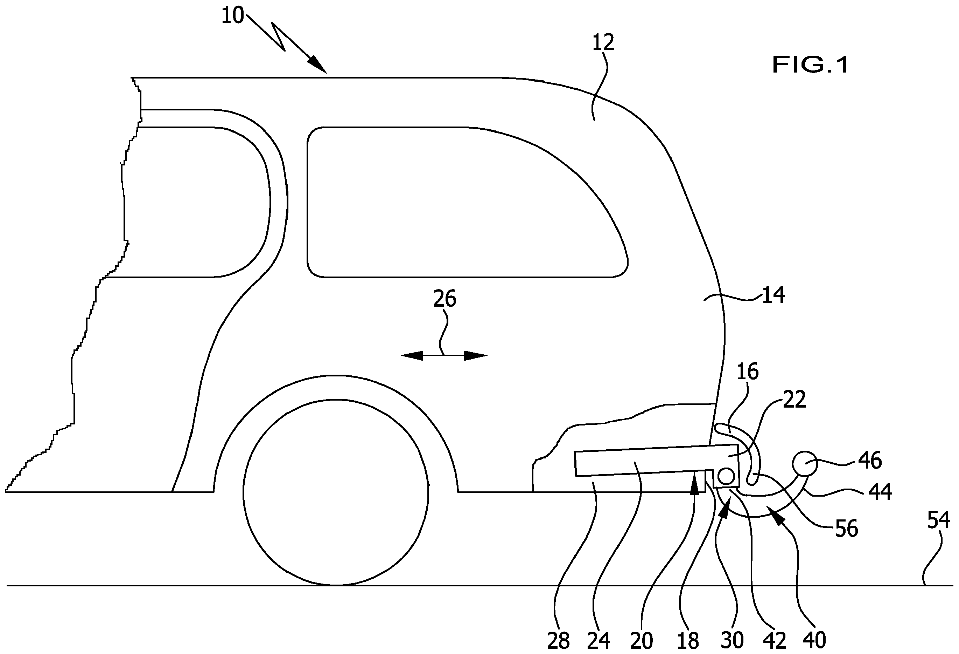

Ein in Fig. 1 dargestelltes und als Ganzes mit 10 bezeichnetes Kraftfahrzeug umfasst eine Karosserie 12, welche an einem Heckbereich 14 eine Stoßfängereinheit 16 trägt.

An einer von der Stoßfängereinheit 16 überdeckten Rückseite 18 des Heckbereichs 14 ist ein Querträger 22 einer als Ganzes mit 20 bezeichneten Trägereinheit vorgesehen, welcher durch Seitenträger 24 an dem Heckbereich der Karosserie 12 fixiert ist, beispielsweise dadurch fixiert ist, dass sich die Seitenträger 24 parallel zu einer Längsrichtung 26 der Karosserie 12 erstrecken und in Seitenbereichen 28 des Heckbereichs 14 an diesem fixiert sind.

Dabei ist der Querträger 22 zwischen der Rückseite 18 des Heckbereichs 14 und der Stoßfängereinheit 16 angeordnet und durch die Stoßfängereinheit 16 überdeckt.

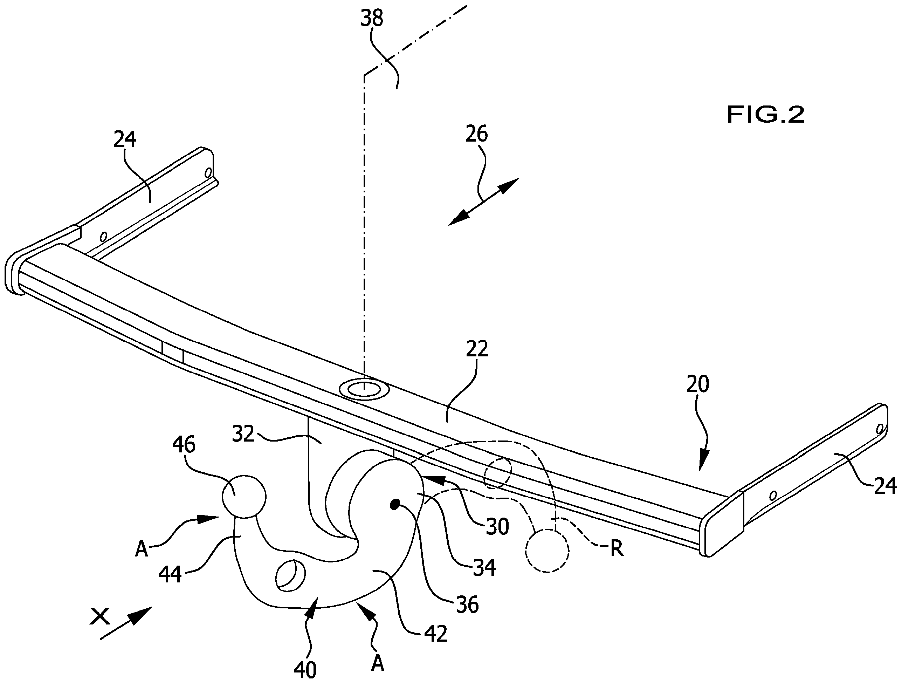

Die Trägereinheit 20 ist ferner mit einer als Ganzes mit 30 bezeichneten Lagereinheit versehen, deren Lagerbasis 32 mit dem Querträger 22 verbunden ist, wie in Fig. 2 dargestellt.

Die Lagereinheit 30 umfasst ferner ein als Ganzes mit 34 bezeichnetes Lagerelement, welches mit einem ersten Ende 42 eines als Ganzes mit 40 bezeichneten und ebenfalls von der Trägereinheit 20 umfassten und insbesondere als Kugelhals ausgebildeten Kupplungselements verbunden ist, der sich von dem ersten Ende 42 bis zu einem zweiten Ende 44 erstreckt und an seinem zweiten Ende 44 eine als Ganzes mit 46 bezeichnete Kupplungskugel trägt.

Das Lagerelement 34 kann ein mit der Lagerbasis 32 fest verbundenes oder ein abnehmbar an der Lagerbasis montierbares Lagerelement sein.

Alternativ kann bei der in Fig. 2 dargestellten Lösung das Lagerelement 34 jedoch ein Schwenklagerelement sein, welches relativ zur Lagerbasis 32 um eine mit 36 bezeichnete Schwenkachse verschwenkbar ist, so dass das Kupplungselement 40 von der in Fig. 2 mit durchgezogenen Linien dargestellten Arbeitsstellung A in eine mit gestrichelten Linien dargestellte Ruhestellung R verschwenkbar ist, in welcher sich der Kugelhals 40 ausgehend von der Lagerbasis 32 quer zur Längsrichtung 26 der Kraftfahrzeugkarosserie 12 und damit insbesondere längs des Querträgers 22 erstreckt.

Damit verläuft das Kupplungselement 40 in der gestrichelt dargestellten Ruhestellung R quer zu einer vertikalen Längsmittelebene 38 der Kraftfahrzeugkarosserie 12 und auch der Kupplungsträgereinheit 20, wobei die vertikale Längsmittelebene 38 damit auch parallel zur Längsrichtung 26 verläuft.

Ferner verläuft auch die Schwenkachse 36 vorzugsweise quer zur Längsmittelebene 38, jedoch relativ zur vertikalen Längsmittelebene um einen Winkel geneigt, wobei der Winkel beispielsweise weniger als 70° oder insbesondere mehr als 20° beträgt.

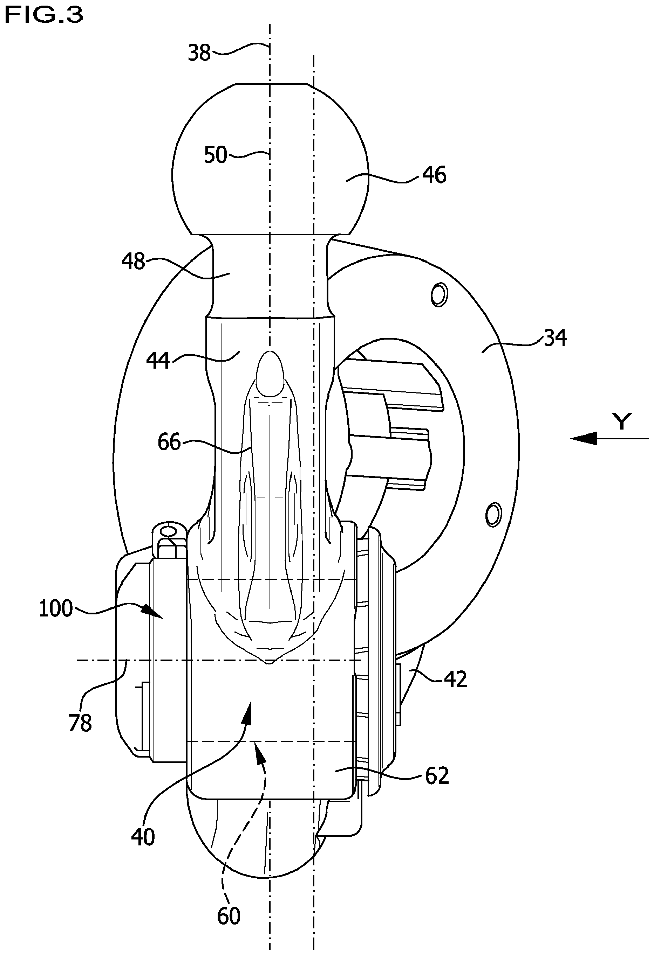

Ein Ausführungsbeispiel eines derartigen Kugelhalses 40 ist in Fig. 3 vergrößert dargestellt, wobei das Kupplungselement 40 insbesondere an dem Lagerelement 34 angeformt ist und das Lagerelement 34 in diesem Fall als Schwenklagerelement zur schwenkbaren Lagerung an der Lagerbasis 32 ausgebildet ist.

Bei dem dargestellten Ausführungsbeispiel des Kupplungselements 40 trägt dieses insbesondere an seinem zweiten Ende 44 einen Kugelansatz 48, der eine zylindrisch zu einer Kugelmittelachse verlaufende Mantelfläche aufweist, die in einem radialen Abstand um eine Kugelmittelachse verläuft, der kleiner ist als ein Radius der Kupplungskugel 46.

Bei dem dargestellten Ausführungsbeispiel des Kupplungselements 40 weist dieses, wie in Fig. 3 bis 6 dargestellt, einen einstückig in den Kugelhals 40 integrierten und vorzugsweise in Form eines Ringkörpers ausgebildeten Aufnahmebereich 60 auf, der zwischen einem ersten Abschnitt 64 liegt, welcher sich von dem ersten Ende 42 des Kugelhalses 40 bis zum Ringkörper 62 erstreckt, und einem zweiten Abschnitt 66 liegt, welcher sich von dem Ringkörper 62 bis zu dem zweiten Ende 44 des Kupplungselements 40 erstreckt.

Der Ringkörper 62 umschließt eine als Ganzes mit 72 bezeichnete Aufnahme, welche sich beispielsweise in Form eines Durchbruchs von einer ersten Stirnseite 74 des Ringkörpers 62 bis zu einer zweiten Stirnseite 76 des Ringkörpers 62 erstreckt und beispielsweise eine Mittelachse 78 bildet, die quer zur Längsmittelebene 38 verläuft, und beispielsweise gegenüber einer Senkrechten zur Längsmittelebene 38 um einen spitzen Winkel, beispielsweise im Bereich von 5° bis 30° geneigt sein kann.

Die Aufnahme 72 wird insbesondere gebildet durch einen Aufnahmekanal 82, eine Innenwand 84, die im Anschluss an die erste Außenseite 74 des Aufnahmebereichs 60 einen im Wesentlichen zylindrisch zur Mittelachse 78 verlaufenden und um die Mittelachse 78 umlaufenden Wandbereich 86 aufweist, sowie einen vom Wandbereich 86 ausgehenden und sich bis zur zweiten Stirnseite 76 konisch erweiternden Wandbereich 88 aufweist, der somit beim Übergang zur zweiten Außenseite 76 des Aufnahmebereichs in größerem radialen Abstand von der Mittelachse 78 verläuft als nahe des zylindrischen Wandbereichs 84.

In der Aufnahme 72 ist eine als Ganzes mit 100 bezeichnete Einbaueinheit aufgenommen, welche mit einem Gehäuse 102 versehen ist, das einen ersten Gehäuseabschnitt 104 aufweist, welcher an der ersten Außenseite 74 anliegt und insbesondere von dieser abgestützt ist.

Von dem ersten Gehäuseabschnitt 104 erstreckt sich ein zweiter Gehäuseabschnitt 106 durch den Aufnahmekanal 82 hindurch bis zur zweiten Außenseite 76.

Vorzugsweise ist dabei der zweite Gehäuseabschnitt 106 einstückig an den ersten Gehäuseabschnitt 104 angeformt, so dass diese einen Gehäuseinnenraum 108 umschließen, in welchem beispielsweise ein Steckverbinderelement 112 oder auch eine elektrische Schaltung, gegebenenfalls noch mit Sensoren, angeordnet ist.

Eine Zugänglichkeit zum Gehäuseinnenraum 108 wird beispielsweise durch einen den ersten Gehäuseabschnitt 104 abschließenden Deckel 114 ermöglicht, welcher mittels eines Scharniers 116 relativ zum ersten Gehäuseabschnitt 104 verschwenkbar ist und auf einer dem zweiten Gehäuseabschnitt 106 gegenüberliegenden Seite am ersten Gehäuseabschnitt 104 angeordnet ist.

Beispielsweise ist dabei der zweite Gehäuseabschnitt 106 so ausgebildet, dass dieser zumindest an dem zylindrischen Wandbereich 86 des Aufnahmekanals anliegt, sich jedoch in Richtung des sich erweiternden Wandbereichs 88 so fortsetzt, dass zwischen einer Außenseite 122 des zweiten Gehäuseabschnitts 106 und dem Wandbereich 88 ein Freiraum 124 vorliegt, in welchem beispielsweise an der Außenseite 122 angeformte Rastelemente 126, insbesondere Rastvertiefungen, angeordnet sind, wobei die Rastvertiefungen insbesondere als geschlossen um den zweiten Gehäuseabschnitt 106 an dessen Außenseite 122 umlaufende Vertiefungen, vorzugsweise Nuten, ausgebildet sind.

Zur Fixierung des Gehäuses 102 der Einbaueinheit 100 an der Aufnahme 80 ist ein als Ganzes mit 130 bezeichneter Montagekörper vorgesehen, welcher einen Basiskörper 132 aufweist, der so ausgebildet ist, dass er den zweiten Gehäuseabschnitt 106 im Bereich des Freiraums 124 umschließt, wobei am Basiskörper 132 relativ zu diesem durch beiderseitige Freisparungen 134 relativ zum Basiskörper 132 freigestellte Rastelementträger 136 vorgesehen sind, die beispielsweise in Form von Zungen ausgebildet sind und an einem ersten Ende 138 einstückig in den Basiskörper 132 übergehen und an einem zweiten Ende 142 zweite Rastelemente 146, beispielsweise ausgebildet als Rastkrallen, tragen, die in der Lage sind, mit den ersten Rastelementen 126, beispielsweise ausgebildet als Rastvertiefungen, in Eingriff zu kommen.

Dabei sind die Rastelementträger 136 so ausgebildet, dass sie elastisch bewegbar sind, so dass die Möglichkeit besteht, die zweiten Rastelemente 146 gegen die elastische Kraftwirkung der Rastelementträger 136 von den ersten Rastelementen 126 wegzubewegen, insbesondere über diese hinwegzubewegen, um eine Rastverbindung zwischen den ersten Rastelementen 126 und den zweiten Rastelementen 146 herzustellen oder zu lösen.

Vorzugsweise sind hierzu die zweiten Rastelemente 146 mit Anlaufschrägen 148 versehen, die mit entsprechenden Anlaufschrägen 128 der ersten Rastelemente 126 zusammenwirken, um die zweiten Rastelemente 146 in eine Stellung zu bringen, in welcher sie in der Lage sind, mindestens mit einem der ersten Rastelementen 126 die beabsichtigte Rastverbindung einzugehen.

Die Rastverbindung wird dabei durch die Rastelementträger 136 aufrechterhalten, die einerseits an dem Basiskörper 132 abgestützt sind und die andererseits zweiten Rastelemente 142 derart beaufschlagen, dass diese ohne zusätzliche Einwirkung in Eingriff mit den ersten Rastelementen 126 dauerhaft verbleiben.

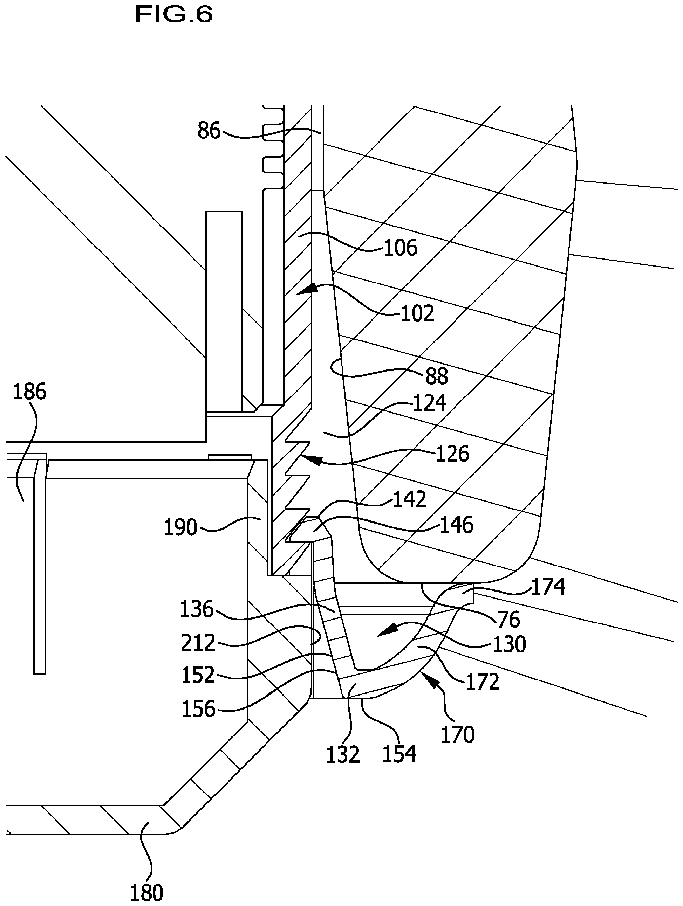

Um die Rastverbindung zwischen den ersten Rastelementen 126 und den zweiten Rastelementen 146 einfach lösen zu können, sind, wie in Fig. 6 ebenfalls dargestellt, die Rastelementträger 136 mit Druckflächen 152 versehen, welche im Bereich der Rastelementträger 136 sich in Richtung vom zweiten Ende 142 zum ersten Ende 138 konisch erweitern und sich vorzugsweise in Fortsetzung des ersten Endes 138 der Rastelementträger 136 in den Basiskörper 132 hineinerstrecken und sich dabei bis zu einer den Rastelementen 146 gegenüberliegend verlaufenden Stirnseite des Montagekörpers 130 erstrecken, so dass die Druckflächen 152 sich von der Stirnseite 154 durch den Basiskörper 132 hindurch und bis in die Rastelementträger 136 hinein verlaufende Aussparungen 156 bilden, die bezüglich einer Innenfläche 158 des Basiskörpers 132 radial nach außen versetzt sind und über in der Stirnseite 154 liegende Zugangsöffnungen 162 von Seiten der Stirnseite 154 des Basiskörpers 132 zugänglich sind.

Außerdem umfasst der Montagekörper 130 noch sich ausgehend vom Basiskörper 132 erstreckende Stützelemente 170, die sich vom Basiskörper 132 ausgehend in Richtung der zweiten Außenseite 76 des Aufnahmebereichs 60 erstrecken und vorzugsweise Stützfußträger 172 aufweisen, die sich ausgehend von dem Basiskörper 132 im Bereich der Stirnseite 154 radial außenliegend zu den Rastelementträgern 136 in Richtung der zweiten Außenseite 76 erstrecken und Stützfüße 174 tragen, mit denen sich die Stützelemente 170 an der zweiten Außenseite 76 abstützen.

Die Stützelemente 170, insbesondere die Stützfußträger 172, sind elastisch deformierbar ausgebildet, so dass mit diesen eine Anpassung an Einbautoleranzen des Aufnahmebereichs 60 sowie des Gehäuses 102 der Einbaueinheit 100 möglich ist und dabei diese aufgrund ihrer Elastizität zusätzlich noch dafür sorgen, dass das Gehäuse 102 der Einbaueinheit 100 durch die elastisch deformierten Stützelemente 170 eine Kraftwirkung erfährt, die den ersten Gehäuseabschnitt 102 in Anlage an der ersten Außenfläche 74 kraftbeaufschlagt hält.

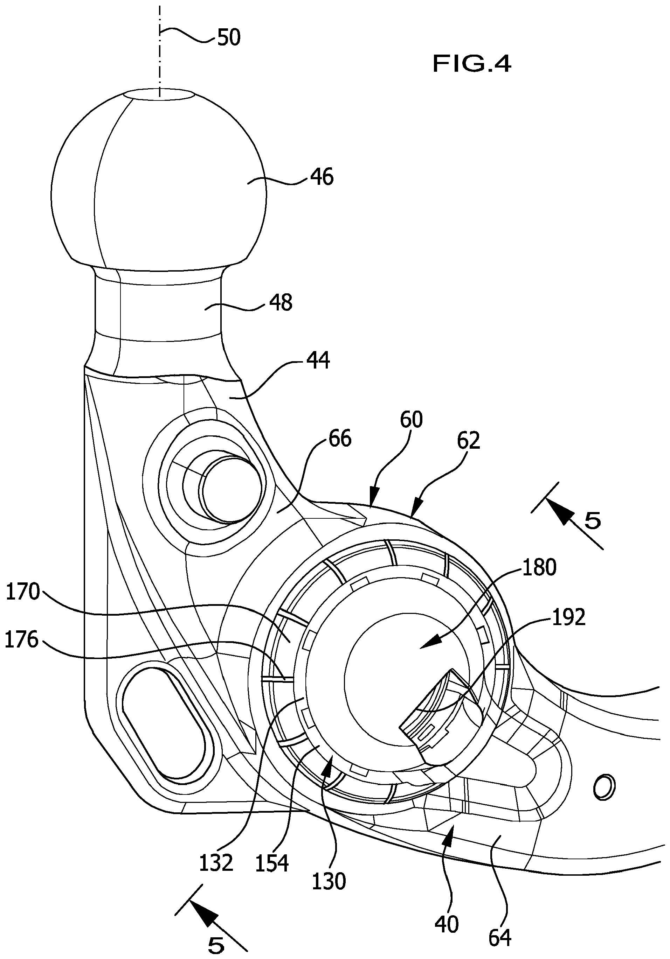

Wie in Fig. 4 dargestellt, umfasst der Montagekörper 130 aufeinanderfolgend in einer Umlaufrichtung um den zweiten Gehäuseabschnitt 106 an dem Basiskörper 132 gehaltene Stützelemente 170 die durch Zwischenräume 176 in Bogensegmente, beispielsweise Bogensegmente von weniger als 45°, vorzugsweise weniger als 30°, unterteilt sind, so dass dadurch die Anpassungsfähigkeit der Stützelemente 170 an Maßtoleranzen des Aufnahmebereichs 60 noch verbessert ist, da die einzelnen, als Bogensegmente ausgebildeten Stützelemente 170 die Möglichkeit haben, sich in unterschiedlichster Art und Weise zu deformieren und sich somit unterschiedlichsten Bereichen mit unterschiedlichsten Maßtoleranzen anzupassen.

Insbesondere erfolgt bei der erfindungsgemäßen Lösung ein Montieren des Montagekörpers 130, dadurch, dass dieser auf den die ersten Rastelemente 126 aufweisenden Bereich des zweiten Gehäuseabschnitts 106 aufgeschoben wird, so dass die zweiten Rastelemente 146 über die ersten Rastelemente 126 des zweiten Gehäuseabschnitts 106 hinweggleiten, wobei ein Aufschieben des Montagekörpers 130 auf den zweiten Gehäuseabschnitt 106 so lange erfolgen kann, bis eine ausreichend große Deformation der Stützelemente 170 durch Anpressen der Stützfüße 174 derselben an der zweiten Außenseite 76 erreicht ist, und somit die elastische Deformation der Stützelemente 170 eine Kraft bewirkt, die den ersten Gehäuseabschnitt 104 kraftbeaufschlagt in Anlage an der ersten Seitenfläche 74 des Aufnahmebereichs 60 hält.

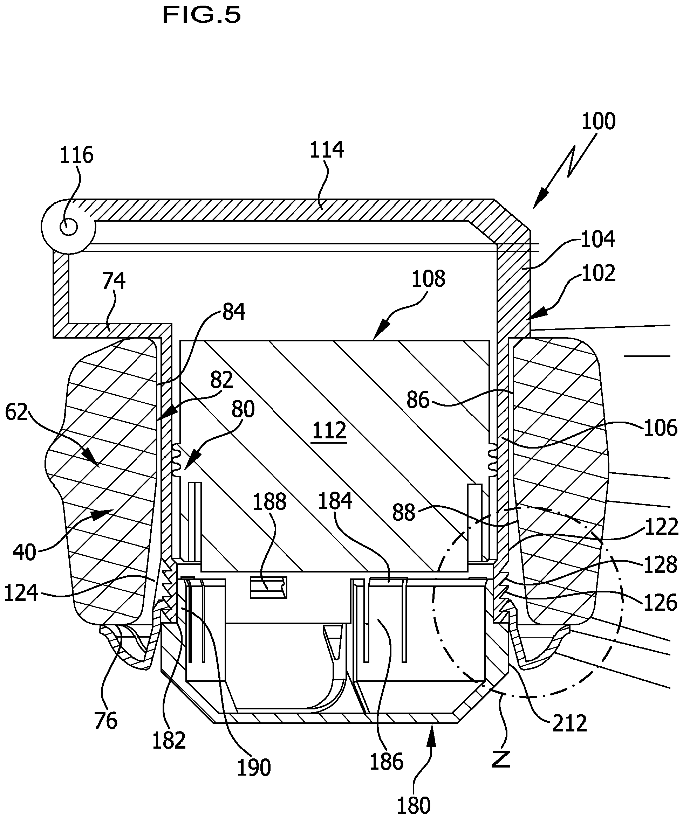

Bei dem ersten Ausführungsbeispiel ist, wie in Fig. 4 und Fig. 5 dargestellt, der zweite Gehäuseabschnitt 106 auf seiner dem ersten Gehäuseabschnitt 104 abgewandten Seite mit einem Deckel 180 verschlossen, welcher in eine Zugangsöffnung 182 des zweiten Gehäuseabschnitts 106 eingreift und seinerseits ebenfalls mittels Rastelemente 184 tragenden Rastzungen 186 dadurch an dem zweiten Gehäuseabschnitt 106 fixiert ist, dass die Rastelemente 184 in Rastausnehmungen 188 des zweiten Gehäuseabschnitts 106 eingreifen.

Insbesondere sind die Rastelemente 184 an einem Zentrierkörper 190 des Deckels 180 gehalten, mit dem der Deckel 180 durch die Zugangsöffnung 182 in den zweiten Gehäuseabschnitt 106 eingreift.

Ferner ist der Deckel 180 noch mit einer Zuleitungsöffnung 192 versehen, über welche Zuleitungen in den Gehäuseinnenraum 108, beispielsweise zum Steckverbinderelement 112, eingeführt werden können.

Insbesondere weist auch der Montagekörper 130 keine geschlossen umlaufenden aufeinander folgend angeordneten Stützelemente 170 auf, sondern die Anordnung der Stützelemente 170 ist in einem Teilabschnitt zur Ausbildung eines Durchlasses 194 für Zuleitungen unterbrochen, wobei der Durchlass 194 im Montagekörper 130 durch eine Brücke 196 des Basiskörpers 132 übergriffen wird, so dass der Basiskörper 132 insgesamt als geschlossen um den zweiten Gehäuseabschnitt 106 umlaufende Struktur ausgebildet ist und somit eine ausreichende Stabilität aufweist.

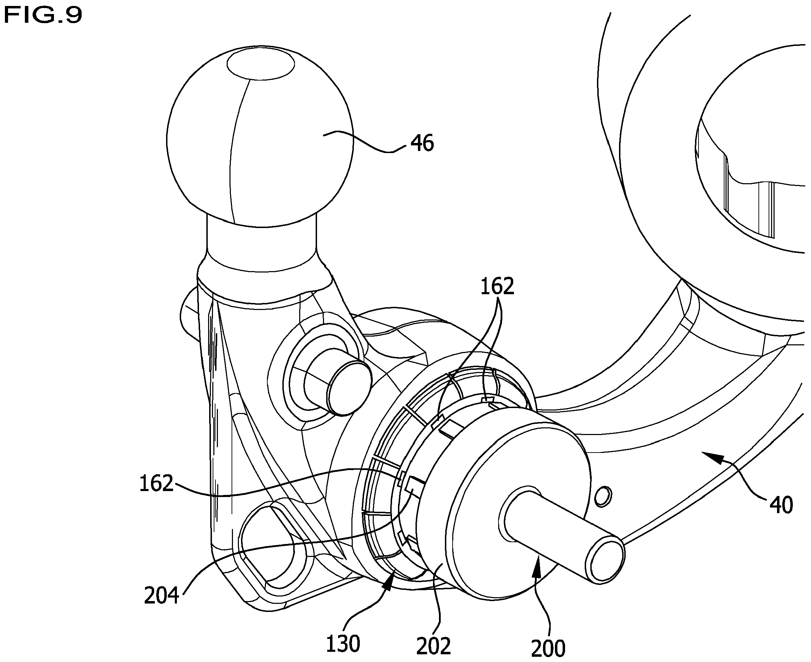

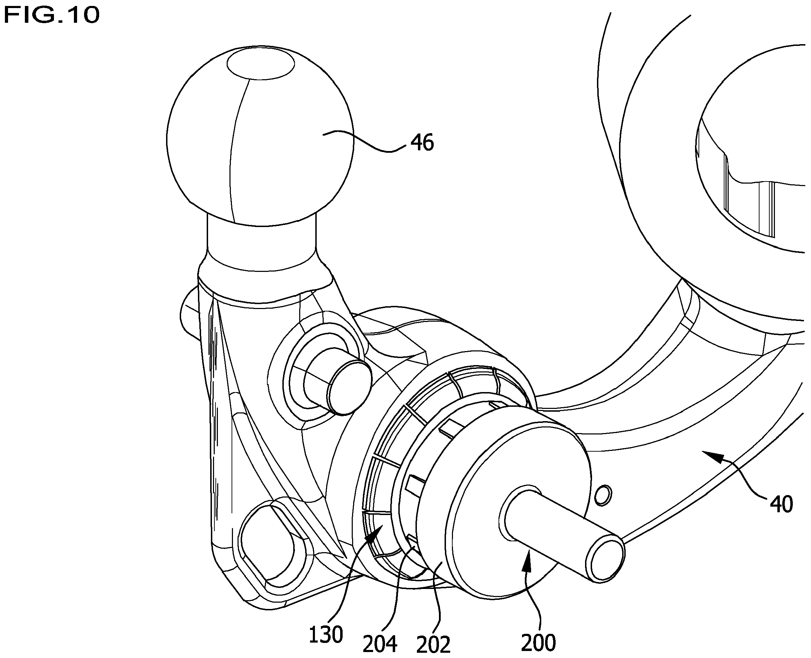

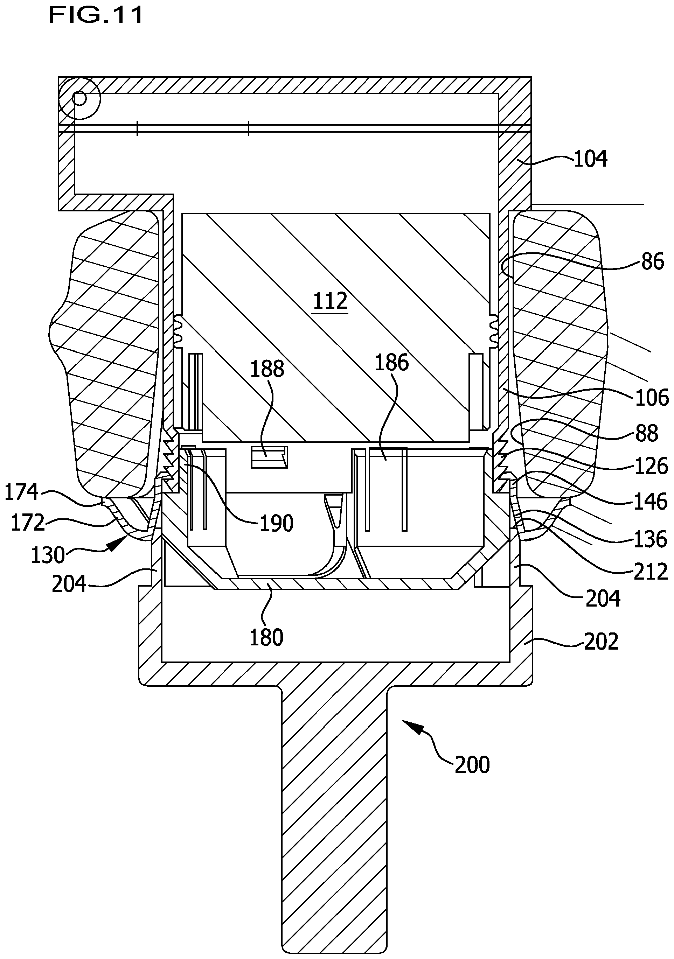

Um die Fixierung des Montagekörpers 130 an dem zweiten Gehäuseabschnitt 106 lösen zu können, ist, wie in den Fig. 9 bis 11 dargestellt, ein als Ganzes mit 200 bezeichnetes Lösewerkzeug vorgesehen, welches einen Trägerkörper 202 aufweist, an welchem Lösefinger 204 angeordnet sind, wobei die Lösefinger 204 so ausgebildet und dimensioniert sind, dass diese über die Zugangsöffnungen 162 in die Aussparungen 156 eingeschoben werden können und dabei mit Stirnseiten 206 auf die Druckflächen 152 der Rastelementträger 136 einwirken, um die Rastelementträger 136 entgegen ihrer elastischen Kraftwirkung auf die zweiten Rastelemente 146 derart zu deformieren, dass die zweiten Rastelemente 146 mit den ersten Rastelementen 126 außer Eingriff kommen, um die Verrastung des Montagekörpers 130 mit dem zweiten Gehäuseabschnitt 106 zu lösen und somit das Gehäuse 100 aus der Aufnahme 80 entnehmen zu können.

Insbesondere ist dabei der Deckel 180 so ausgebildet, dass der Basiskörper 132 mit seinen Innenflächen 158 an einer Außenseite 212 des Deckels 180 anliegt und somit auch durch den mittels des Zentrierkörpers 190 relativ zum zweiten Gehäuseabschnitt 106 zentrierten Deckel 180 relativ zum Gehäuse 102 zentriert ausgerichtet wird.

Ferner dient die Außenfläche 212 des Deckels 180 dazu, dass sich eine Innenfläche 208 der jeweiligen Lösefinger 204 an dieser abstützen kann, wenn dieser auf den jeweiligen Rastkörperträger 136 einwirkt, um diesen so zu deformieren, dass ein Bewegen des jeweiligen zweiten Rastelements 146 in einem Maße erfolgt, dass dieses außer Eingriff mit dem jeweiligen ersten Rastelement 126 kommt.

Insbesondere ist das Lösewerkzeug 200 so ausgebildet, dass die Anzahl der Lösefinger 204 der Anzahl der Zugangsöffnungen 162 im Montagekörper 130 entspricht, so dass ein einmaliges Ansetzen des Lösewerkzeugs 200 es erlaubt, mit sämtlichen Lösefingern 204 auf sämtliche Rastelementträger 136 gleichzeitig einzuwirken, um sämtliche zweiten Rastelemente 146 außer Eingriff mit den entsprechenden ersten Rastelementen 126 am zweiten Gehäuseabschnitt 106 zu bringen und den Montagekörper 130 damit vom zweiten Gehäuseabschnitt 106 lösen zu können.

## Patentansprüche

1. Einbaueinheit für eine an einer Karosserie (12) eines Kraftfahrzeugs (10) angebaute Trägereinheit (20), umfassend ein Gehäuse (102) mit einem sich auf einer Seite der Trägereinheit (20) abstützenden ersten Gehäuseabschnitt (104) und einem eine Aufnahme (72) in der Trägereinheit (20) durchgreifenden zweiten Gehäuseabschnitt (106) sowie einen dem ersten Gehäuseabschnitt (104) gegenüberliegenden und sich an der Trägereinheit (20) an einer dem ersten Gehäuseabschnitt (104) abgewandten Seite (74) abstützenden Montagekörper (130), der bei an der Trägereinheit (20) montierter Einbaueinheit (100) an dem zweiten Gehäuseabschnitt (106) durch erste an dem zweiten Gehäuseabschnitt (106) und zweite an dem Montagekörper (130) angeordnete Rastelemente (126, 146) fixiert ist, wobei der Montagekörper (130) einen Basiskörper (132) aufweist, mit welchem die zweiten Rastelemente (146) verbunden sind, und der Montagekörper (130) mit Stützelementen (170) zusammenwirkt, welche sich an der Trägereinheit (20) abstützen,
**dadurch gekennzeichnet , dass** die zweiten Rastelemente (146) durch elastisch bewegbare Rastelementträger (136) mit dem Basiskörper (132) verbunden sind, und dass die elastisch bewegbaren Rastelementträger (136) auf einer dem zweiten Gehäuseabschnitt (106) zugewandten Seite Druckflächen (152) aufweisen, über welche die elastisch bewegbaren Rastelementträger (136) derart beaufschlagbar sind, dass die zweiten Rastelemente (146) gegen die elastische Kraftwirkung der Rastelementträger (136) von den ersten Rastelementen (126) wegbewegbar sind und mit den ersten, am zweiten Gehäuseabschnitt (106) vorgesehenen Rastelementen (126) außer Eingriff kommen.

2. Einbaueinheit nach Anspruch 1, **dadurch gekennzeichnet, dass** die Druckflächen (152) sich an den Rastelementträgern (136) ausgehend von ihren dem Basiskörper (132) zugewandten Enden (138) bei ihrer Erstreckung in Richtung der zweiten Rastelemente (146) zunehmend in Richtung der ersten Rastelemente (126) des zweiten Gehäuseabschnitts (106) erstrecken, dass insbesondere die Druckflächen (152) eine an dem jeweiligen Rastelementträger (136) gebildete Aussparung (156) begrenzen.

3. Einbaueinheit nach einem der voranstehenden Ansprüche, **dadurch gekennzeichnet, dass** die Druckflächen (152) über am Basiskörper (132) vorgesehene Zugangsöffnungen (162) von Seiten des Basiskörpers (132) zugänglich sind, dass insbesondere die jeweiligen Aussparungen (156) über die Zugangsöffnungen (162) zugänglich sind.

4. Einbaueinheit nach einem der voranstehenden Ansprüche, **dadurch gekennzeichnet, dass** zum Lösen der Rastverbindung die Druckflächen (152) der Rastelementträger (136) durch auf die Druckflächen (152) wirkende Lösefinger (204) derart beaufschlagt werden, dass die Rastelementträger (136) die zweiten Rastelemente (142) in eine nicht mehr mit den ersten Rastelementen (126) verrastende Lösestellung bewegen, dass insbesondere die Lösefinger (204) durch die Zugangsöffnungen (162) in die Aussparungen (156) eingeführt werden.

5. Einbaueinheit nach einem der voranstehenden Ansprüche, **dadurch gekennzeichnet, dass** die Druckflächen (152) durch an einem Lösewerkzeug (200) angeordnete Lösefinger (204) zum Lösen der Rastverbindung beaufschlagt werden, dass insbesondere die Zahl der Lösefinger (204) an dem Lösewerkzeug (200) der Zahl der der mit Druckflächen (152) versehenen Rastelementträger (136) entspricht.

6. Einbaueinheit nach einem der voranstehenden Ansprüche, **dadurch gekennzeichnet, dass** die zweiten Rastelemente (146) als Rastkrallen oder Rastvertiefungen ausgebildet sind, welche mit an dem zweiten Gehäuseabschnitt (106) angeordneten als Rastvertiefungen oder Rastkrallen ausgebildeten ersten Rastelementen (126) zusammenwirken.

7. Einbaueinheit nach einem der voranstehenden Ansprüche, **dadurch gekennzeichnet, dass** die Rastelementträger (136) die Rastelemente (146) elastisch bewegbar mit dem Basiskörper (132) verbinden, dass insbesondere die Rastelementträger (136) die zweiten Rastelemente (146) derart beaufschlagen, dass diese aufgrund der elastischen Kraftwirkung der Rastelementträger (136) bei wirksamer Rastverbindung mit den ersten Rastelementen (126) in Eingriff gehalten werden.

8. Einbaueinheit nach einem der voranstehenden Ansprüche, **dadurch gekennzeichnet, dass** der Basiskörper (132) ein geschlossen um eine Mittelachse (78) des zweiten Gehäuseabschnitts (106) umlaufender Körper ist, dass insbesondere der Basiskörper (132) zumindest teilweise als Ringkörper ausgebildet ist dessen Ringkörperenden durch eine Brücke (194) miteinander verbunden sind und dass insbesondere die Brücke (194) einen Durchlass (192) für eine in das zweite Gehäusesegment (106) führende Leitung bildet.

9. Einbaueinheit nach einem der voranstehenden Ansprüche, **dadurch gekennzeichnet, dass** die Montageeinheit (130) sich mittels der Stützelemente (170) an einer dem ersten Gehäuseabschnitt (104) gegenüberliegenden Seite (76) der Trägereinheit (20) abstützt, dass insbesondere sich die Stützelemente (170) an einer Seitenfläche (76) der Trägereinheit (20) außerhalb der Aufnahme (72) abstützen.

10. Einbaueinheit nach einem der voranstehenden Ansprüche, **dadurch gekennzeichnet, dass** die Stützelemente (170) Stützfüße (174) aufweisen, die mittels elastisch deformierbaren Stützfußträgern (172) mit dem Basiskörper (132) verbunden sind, dass insbesondere die Stützfußträger (172) sich bogenförmig von dem Basiskörper (132) zu den Stützfüßen (174) erstrecken, dass insbesondere die Stützelemente (172) in einer parallel zu der an der Trägereinheit (20) vorgesehenen Seitenfläche (76) verlaufenden Fläche aufeinanderfolgend angeordnet, jedoch relativ zueinander elastisch bewegbar ausgebildet sind und dass insbesondere die Stützelemente (170) als in der zur Seitenfläche (76) parallelen Fläche aufeinanderfolgend angeordnete Bogensegmente ausgebildet sind.

11. Einbaueinheit nach einem der voranstehenden Ansprüche, **dadurch gekennzeichnet, dass** in den zweiten Gehäuseabschnitt (106) von dessen dem ersten Gehäuseabschnitt (104) abgewandter Seite eine elektrische Leitung eingeführt ist.

12. Einbaueinheit nach einem der voranstehenden Ansprüche, **dadurch gekennzeichnet, dass** der zweite Gehäuseabschnitt (106) auf seiner dem ersten Gehäuseabschnitt (104) abgewandten Seite durch einen Deckel (180) verschlossen ist, dass insbesondere der Deckel (180) und die Montageeinheit (130) separate Teile sind, dass insbesondere der Deckel (180) an dem zweiten Gehäuseabschnitt (106) fixiert ist und dass insbesondere die Montageeinheit (130) den Deckel (180) umschließend ausgebildet ist.

13. Einbaueinheit nach einem der Ansprüche 4 bis 12, **dadurch gekennzeichnet, dass** der Deckel (180) eine Außenfläche (212) aufweist, an welcher sich die Lösefinger (204) bei der Einwirkung auf die Druckflächen (152) abstützen.

14. Einbaueinheit nach einem der voranstehenden Ansprüche, **dadurch gekennzeichnet, dass** die Einbaueinheit (100) zur Aufnahme eines Steckverbinderelements (112) ausgebildet ist und/oder dass die Einbaueinheit (100) zur Aufnahme einer elektronischen Schaltung ausgebildet ist und/oder dass die Einbaueinheit (100) zur Aufnahme von Sensoren ausgebildet ist.

15. Trägereinheit zur Montage an einer Karosserie (12) eines Kraftfahrzeugs (10), **dadurch gekennzeichnet, dass** die Trägereinheit (20) mit einer Einbaueinheit (100) nach einem der voranstehenden Ansprüche versehen ist, dass insbesondere die Trägereinheit (20) ein Kupplungselement (40) für einen Anhänger und/oder ein Kupplungselement (40) für einen Lastenträger umfasst, welches mit der Aufnahme (72) versehen ist, dass insbesondere das Kupplungselement (40) sich von einer Heckseite (14) des Kraftfahrzeugs (10) weg erstreckt und dass insbesondere das Kupplungselement (40) mit einer Einbaueinheit (100) nach einem der voranstehenden Ansprüche versehen ist.

## Claims

1. An installation unit for a carrier unit (20) that is mounted on a body (12) of a motor vehicle (10), comprising a housing (102) having a first housing portion (104) that is supported on one side of the carrier unit (20), a second housing portion (106) that passes through a receptacle (72) in the carrier unit (20), and a mounting body (130) that is opposite the first housing portion (104) and is supported on the carrier unit (20) on a side (74) remote from the first housing portion (104) and, when the installation unit (100) is mounted on the carrier unit (20), is fixed to the second housing portion (106) by first latching elements (126) arranged on the second housing portion (106) and second latching elements (146) arranged on the mounting body (130), wherein the mounting body (130) has a base body (132) to which the second latching elements (146) are connected, and the mounting body (130) cooperates with support elements (170) that are supported against the carrier unit (20), **characterized in that** the second latching elements (146) are connected to the base body (132) by resiliently moveable latching element carriers (136), and **in that** the resiliently moveable latching element carriers (136) have, on a side facing the second housing portion (106), pressure faces (152) by way of which the resiliently moveable latching element carriers (136) are configured to be urged such that the second latching elements (146) are moveable away from the first latching elements (126) against the resilient force action of the latching element carriers (136) and are disengaged from the first latching elements (126) provided on the second housing portion (106).

2. The installation unit as claimed in claim 1, **characterized in that**, as the pressure faces (152) extend in the direction of the second latching elements (146), they extend on the latching element carriers (136) from their ends (138) facing the base body (132) increasingly in the direction of the first latching elements (126) of the second housing portion (106), **in that** in particular the pressure faces (152) delimit a recess (156) formed in the respective latching element carrier (136).

3. The installation unit as claimed in one of the preceding claims, **characterized in that** the pressure faces (152) are accessible from the base body (132) side by way of access openings (162) provided in the base body (132), **in that** in particular the respective recesses (156) are accessible by way of the access openings (162).

4. The installation unit as claimed in one of the preceding claims, **characterized in that**, for the purpose of releasing the latching connection, the pressure faces (152) of the latching element carriers (136) are urged by release fingers (204) acting on the pressure faces (152) such that the latching element carriers (136) move the second latching elements (142) into a release position that is no longer latched to the first latching elements (126), **in that** in particular the release fingers (204) are introduced into the recesses (156) through the access openings (162).

5. The installation unit as claimed in one of the preceding claims, **characterized in that** the pressure faces (152) are urged by release fingers (204) arranged on a release tool (200), for the purpose of releasing the latching connection, **in that** in particular the number of release fingers (204) on the release tool (200) corresponds to the number of latching element carriers (136) provided with pressure faces (152).

6. The installation unit as claimed in one of the preceding claims, **characterized in that** the second latching elements (146) take the form of latching hooks or latching indentations that cooperate with first latching elements (126) that are arranged on the second housing portion (106) and take the form of latching indentations or latching hooks.

7. The installation unit as claimed in one of the preceding claims, **characterized in that** the latching element carriers (136) connect the latching elements (146) to the base body (132) in a resiliently movable manner, **in that** in particular the latching element carriers (136) urge the second latching elements (146) such that these are held in engagement with the first latching elements (126) as a result of the resilient force action of the latching element carriers (136) when the latching connection is active.

8. The installation unit as claimed in one of the preceding claims, **characterized in that** the base body (132) is a body that runs completely around a center axis (78) of the second housing portion (106), **in that** in particular the base body (132) takes the form, at least in part, of an annular body, of which the annular body ends are connected to one another by a bridge (194), and **in that** in particular the bridge (194) forms a feed-through (192) for a line that leads into the second housing segment (106).

9. The installation unit as claimed in one of the preceding claims, **characterized in that** the mounting unit (130) is supported against an opposite side (76) of the carrier unit (20) to the first housing portion (104) by means of the support elements (170), **in that** in particular the support elements (170) are supported against a side face (76) of the carrier unit (20) outside the receptacle (72).

10. The installation unit as claimed in one of the preceding claims, **characterized in that** the support elements (170) have supporting feet (174) that are connected to the base body (132) by means of resiliently deformable supporting foot carriers (172), **in that** in particular the supporting foot carriers (172) extend in an arc shape from the base body (132) to the supporting feet (174), **in that** in particular the support elements (172) take a form such that they are arranged to succeed one another in a plane running parallel to the side face (76) provided on the carrier unit (20) but are formed to be resiliently movable in relation to one another, and **in that** in particular the support elements (170) take the form of arc segments arranged to succeed one another in the plane parallel to the side face (76).

11. The installation unit as claimed in one of the preceding claims, **characterized in that** an electrical line is introduced into the second housing portion (106) from the side thereof remote from the first housing portion (104).

12. The installation unit as claimed in one of the preceding claims, **characterized in that** the second housing portion (106) is closed on its side remote from the first housing portion (104) by a cover (180), **in that** in particular the cover (180) and the mounting unit (130) are separate parts, **in that** in particular the cover (180) is fixed to the second housing portion (106), and **in that** in particular the mounting unit (130) takes a form surrounding the cover (180).

13. The installation unit as claimed in claims 4 to 12, **characterized in that** the cover (180) has an outer face (212) against which the release fingers (204) are supported during action on the pressure faces (152).

14. The installation unit as claimed in one of the preceding claims, **characterized in that** the installation unit (100) is formed for the purpose of receiving a plug connector element (112), and/or **in that** the installation unit (100) is formed for the purpose of receiving an electronic circuit, and/or **in that** the installation unit (100) is formed for the purpose of receiving sensors.

15. A carrier unit for mounting on a body (12) of a motor vehicle (10), **characterized in that** the carrier unit (20) is provided with an installation unit (100) as claimed in one of the preceding claims, **in that** in particular the carrier unit (20) comprises a coupling element (40) for a trailer and/or a coupling element (40) for a load carrier that is provided with the receptacle (72), **in that** in particular the coupling element (40) extends away from a tail side (14) of the motor vehicle (10), and **in that** in particular the coupling element (40) is provided with an installation unit (100) as claimed in one of the preceding claims.

## Revendications

1. Unité d'installation pour une unité de support (20) montée au niveau d'une carrosserie (12) d'un véhicule automobile (10), comprenant un boîtier (102) avec une première section de boîtier (104) s'appuyant sur un côté de l'unité de support (20) et une seconde section de boîtier (106) traversant un logement (72) dans l'unité de support (20) ainsi qu'un corps de montage (130) opposé à la première section de boîtier (104) et s'appuyant contre l'unité de support (20) au niveau d'un côté (74) détourné de la première section de boîtier (104), qui est fixé en cas d'unité d'installation (100) montée au niveau de l'unité de support (20) à la seconde section de boîtier (106) par des premiers éléments d'encliquetage (126, 146) agencés au niveau de la seconde section de boîtier (106) et des seconds éléments d'encliquetage (126, 146) agencés au niveau du corps de montage (130), dans laquelle le corps de montage (130) présente un corps de base (132), auquel les seconds éléments d'encliquetage (146) sont reliés, et le corps de montage (130) coopère avec des éléments d'appui (170) qui s'appuient contre l'unité de support (20),
**caractérisée en ce que** les seconds éléments d'encliquetage (146) sont reliés par des supports d'élément d'encliquetage (136) mobiles élastiquement au corps de base (132), et que les supports d'élément d'encliquetage (136) mobiles élastiquement présentent sur un côté tourné vers la seconde section de boîtier (106) des surfaces de pression (152), par le biais desquelles les supports d'élément d'encliquetage (136) mobiles élastiquement peuvent être alimentés de telle manière que les seconds éléments d'encliquetage (146) soient mobiles contre l'action de force élastique des supports d'élément d'encliquetage (136) loin des premiers éléments d'encliquetage (126) et viennent hors prise avec les premiers éléments d'encliquetage (126) prévus au niveau de la seconde section de boîtier (106).

2. Unité d'installation selon la revendication 1, **caractérisée en ce que** les surfaces de pression (152) s'étendent au niveau des supports d'élément d'encliquetage (136) à partir de leurs extrémités (138) tournées vers le corps de base (132) lors de leur étendue en direction des seconds éléments d'encliquetage (146) de plus en plus en direction des premiers éléments d'encliquetage (126) de la seconde section de boîtier (106), qu'en particulier les surfaces de pression (152) délimitent un évidement (156) formé au niveau du support d'élément d'encliquetage (136) respectif.

3. Unité d'installation selon l'une quelconque des revendications précédentes, **caractérisée en ce que** les surfaces de pression (152) sont accessibles par le biais d'ouvertures d'accès (162) prévues au niveau du corps de base (132) par des côtés du corps de base (132), qu'en particulier les évidements (156) respectifs sont accessibles par le biais des ouvertures d'accès (162).

4. Unité d'installation selon l'une quelconque des revendications précédentes, **caractérisée en ce que** pour le détachement de la liaison d'encliquetage, les surfaces de pression (152) des supports d'élément d'encliquetage (136) sont sollicitées par des doigts de détachement (204) agissant sur les surfaces de pression (152) de telle manière que les supports d'élément d'encliquetage (136) déplacent les seconds éléments d'encliquetage (142) dans une position de détachement ne s'encliquetant plus avec les premiers éléments d'encliquetage (126), qu'en particulier les doigts de détachement (204) sont introduits par les ouvertures d'accès (162) dans les évidements (156).

5. Unité d'installation selon l'une quelconque des revendications précédentes, **caractérisée en ce que** les surfaces de pression (152) sont sollicitées par des doigts de détachement (204) agencés au niveau d'un outil de détachement (200) pour le détachement de la liaison d'encliquetage, qu'en particulier le nombre de doigts de détachement (204) au niveau de l'outil de détachement (200) correspond au nombre de supports d'élément d'encliquetage (136) pourvus des surfaces de pression (152).

6. Unité d'installation selon l'une quelconque des revendications précédentes, **caractérisée en ce que** les seconds éléments d'encliquetage (146) sont réalisés comme griffes d'encliquetage ou cavités d'encliquetage qui coagissent avec des premiers éléments d'encliquetage (126) agencés au niveau de la seconde section de boîtier (106), réalisés comme cavités d'encliquetage ou griffes d'encliquetage.

7. Unité d'installation selon l'une quelconque des revendications précédentes, **caractérisée en ce que** les supports d'élément d'encliquetage (136) relient les éléments d'encliquetage (146) de manière mobile élastiquement au corps de base (132), qu'en particulier les supports d'élément d'encliquetage (136) sollicitent les seconds éléments d'encliquetage (146) de telle manière que ceux-ci soient maintenus en prise en raison de l'action de la force élastique des supports d'élément d'encliquetage (136) en cas de liaison d'encliquetage active avec les premiers éléments d'encliquetage (126).

8. Unité d'installation selon l'une quelconque des revendications précédentes, **caractérisée en ce que** le corps de base (132) est un corps fermé tournant autour d'un axe médian (78) de la seconde section de boîtier (106), qu'en particulier le corps de base (132) est réalisé au moins partiellement comme corps annulaire, dont les extrémités de corps annulaire sont reliées entre elles par un pont (194) et qu'en particulier le pont (194) forme un passage (192) pour une conduite menant dans le second segment de boîtier (106).

9. Unité d'installation selon l'une quelconque des revendications précédentes, **caractérisée en ce que** l'unité de montage (130) s'appuie au moyen des éléments d'appui (170) contre un côté (76) opposé à la première section de boîtier (104) de l'unité de support (20), qu'en particulier les éléments d'appui (170) s'appuient contre une surface latérale (76) de l'unité de support (20) en dehors du logement (72).

10. Unité d'installation selon l'une quelconque des revendications précédentes, **caractérisée en ce que** les éléments d'appui (170) présentent des pieds d'appui (174) qui sont reliés au moyen de supports de pied d'appui (172) déformables élastiquement au corps de base (132), qu'en particulier les supports de pied d'appui (172) s'étendent en arc du corps de base (132) aux pieds d'appui (174), qu'en particulier les éléments d'appui (172) sont agencés de manière successive dans une surface s'étendant parallèlement à la surface latérale (76) prévue au niveau de l'unité de support (20), sont toutefois réalisés de manière mobile l'une par rapport à l'autre élastiquement et qu'en particulier les éléments d'appui (170) sont réalisés comme des segments arqués agencés de manière successive dans la surface parallèle à la surface latérale (76).

11. Unité d'installation selon l'une quelconque des revendications précédentes, **caractérisée en ce qu'**un câble électrique est introduit dans la seconde section de boîtier (106) depuis son côté éloigné de la première section de boîtier (104).

12. Unité d'installation selon l'une quelconque des revendications précédentes, **caractérisée en ce que** la seconde section de boîtier (106) est fermée sur son côté éloigné de la première section de boîtier (104) par un couvercle (180), qu'en particulier le couvercle (180) et l'unité de montage (130) sont des parties séparées, qu'en particulier le couvercle (180) est fixé à la seconde section de boîtier (106) et qu'en particulier l'unité de montage (130) est réalisée de manière à entourer le couvercle (180).

13. Unité d'installation selon l'une quelconque des revendications 4 à 12, **caractérisée en ce que** le couvercle (180) présente une surface extérieure (212), contre laquelle les doigts de détachement (204) s'appuient lors de l'action sur les surfaces de pression (152).

14. Unité d'installation selon l'une quelconque des revendications précédentes, **caractérisée en ce que** l'unité d'installation (100) est réalisée pour la réception d'un élément connecteur enfichable (112) et/ou que l'unité d'installation (100) est réalisée pour la réception d'un circuit électronique et/ou que l'unité d'installation (100) est réalisée pour la réception de capteurs.

15. Unité de support pour le montage au niveau d'une carrosserie (12) d'un véhicule automobile (10), **caractérisée en ce que** l'unité de support (20) est pourvue d'une unité d'installation (100) selon l'une quelconque des revendications précédentes, qu'en particulier l'unité de support (20) comporte un élément de couplage (40) pour une remorque et/ou un élément de couplage (40) pour un support de charge qui est pourvu du logement (72), qu'en particulier l'élément de couplage (40) s'étend loin d'un côté arrière (14) du véhicule automobile (10) et qu'en particulier l'élément de couplage (40) est pourvu d'une unité d'installation (100) selon l'une quelconque des revendications précédentes.
